# EUROPEAN PATENT APPLICATION

(11) **EP 2 434 438 A1**
(43) Date of publication of application: **28.03.2012**
(21) Application number: 11006319.5
(22) Date of filing: 01.08.2011
(51) Int. Cl.: G06Q 10/00

(54) **Applying business processes to collaboration tools**

(30) Priority: 23.09.2010 US 889178
(71) Applicant: SAP AG, 69190 Walldorf (DE)
(72) Inventor: Kieselbach, Oliver, 69190 Walldorf (DE)
(74) Representative: Müller-Boré & Partner Patentanwälte

(57) **Abstract**

A computer implemented method for providing a business process in an online collaboration includes associating a business process model with the collaboration based on entries made by one or more participants. The business process model may include one or more business processes or process steps. The method may also include providing a graphical interface module to the collaboration participants associated with the business process, the graphical interface module configured to receive data from one or more participants of the collaboration. Data received from the participant interacting with the interface module may be processed in accordance with the process steps associated with the business process. Data received throughout the collaboration may be stored in a memory.

## Description

### BACKGROUND

On-line collaboration tools can permit a community of users to collaborate on projects, share information, meet and discuss issues, and make presentations on-line. Such collaboration tools can be used with various sizes and types of user communities such as work teams, social networks, and other associations of users.

### SUMMARY

A computer implemented method for providing a business process in an online collaboration may include associating a business process model with the online collaboration, the business process model including at least one business process. The data received from a participant to the collaboration may be processing in accordance with a process step associated with the business process. The data may be stored in a memory.

A computer program product for providing a business process in a collaboration, the computer program product including computer readable instructions embodied on tangible, non-transient media, may be operable when executed to associate a business process instance with the collaboration, the business process instance based on a business process model, the business process model defining one or more business process steps. An interface module may be provided to the collaboration, the interface module associated with the business process and configured to receive data from a participant of the collaboration. Data received from the participant interacting with the interface module may be processed in accordance with a process step associated with the business process, and the data may be stored in a memory.

A system for implementing a business process into an online collaboration may include a memory operable to store information associated with process steps of a plurality of business processes and one or more processors operable to instantiate a robot program as part of the online collaboration. The robot program may be operable to monitor entries made by one or more participants in the online collaboration. In addition, the robot may associate a particular business process from the plurality of business processes with the online collaboration based on the entries. In certain instances, the robot may provide a widget to the one or more participants of the online collaboration, the widget associated with a first business process step of the business process and configured to receive information from one or more participants of the online collaboration. The information received from the one or more participants interacting with the widget may be processed in accordance with a process step associated with the business process, and the information may be stored in the memory.

Certain instances of the embodiments may further include identifying a first business process defined by the business process model based on data received from the participant.

In certain instances of the embodiments, the data may be received from the participant comprises information received from the participant during the online collaboration.

In certain instances of the embodiments, the data received from the participant comprises is received from metadata associated with the participant.

In certain instances of the embodiments, processing the data received from the participant may include processing the data based on rules associated with the business process.

Certain instances of the embodiments may further include providing an interface module to the online collaboration, the interface module associated with the at least one business process and configured to receive data from a participant of the online collaboration.

In certain instances of the embodiments, the business process is a first business process and the interface module is a first interface module. Certain embodiments may further include identifying a second business process based on the data received from the participant and providing a second interface module to the online collaboration, the second interface associated with the second business process.

In certain instances of the embodiments, the second interface module is provided to the participant upon a determination that the first business process is completed.

In certain instances of the embodiments, the interface module is a widget configured to receive data associated with the process step of the business process.

Certain instances of the embodiments may also include monitoring participant entries in the online collaboration, identifying a business process model based on the participant entries, and implementing one or more business processes of the business process model.

In certain instances of the embodiments, the business process is a first business process and the interface is a first interface. The computer program product may be further operable to interpret the data received from the participant of the collaboration, identify a second business process based on the data received from the participant, and provide a second interface to the collaboration, the second interface associated with the second business process.

In certain instances of the embodiments, the robot program is a participant in the online collaboration.

In certain instances of the embodiments, the robot program may be further operable to interpret business process management notation process definitions to determine an order of process steps to be executed in the online collaboration. The robot program may inject widgets into the online collaboration based on the business process management notation definitions and information received from the one or more participants.

### DESCRIPTION OF THE DRAWINGS

FIGURE 1 illustrates an example environment implementing various features of a hosted collaboration in combination with a structured business process model paradigm.

FIGURE 2 illustrates an example collaboration between two collaboration participants.

FIGURE 3 illustrates the application of a robot as a participant in a collaboration to inject process steps into the collaboration.

FIGURE 4 is a process flow diagram for providing business process model process steps to an online collaboration.

### DETAILED DESCRIPTION

Business process management ("BPM") solutions are business focused, tailored to help drive business related, well structured processes within the company. With the ability to associate the collaboration among distributed servers, the reach of possible collaboration participants can be expanded to include public servers or private servers running behind a firewall. The collaboration, however, may be unstructured and uncontrolled. The present disclosure provides unstructured collaborations together with predefined structures and brings BPM closer to users and/or consumers. The present disclosure may extend the reach of workflow users by including the BPM paradigms in widely used end user tools.

Business Process Management paradigms, described and modeled using BPM Notation ("BPMN") and the execution of this model, may be combined with an online collaboration. The BPM model may be a "rule-based" workflow model, which determines at runtime the order and frequency of process steps based on the information and output from the previous process steps. Robots may observe the collaboration between one or more participants and inject predefined artifacts (*e.g*., user interface ("UI") gadgets or widgets) based on key words or explicit actions that one or more participants work on. In certain embodiments, process steps are introduced to the participants of the collaboration when prerequisite steps are determined to be completed.

This disclosure generally describes computer systems, software, and computer implemented methods for providing and managing business processes in collaboration tools, such as online collaboration tools. Business processes may be executed, modeled, documented, automated, governed, or monitored by Business Process Management Suites ("BPMS"). Collaborations may be monitored by robots or other automated processes, which may also participate in the collaborations. The robots may monitor collaboration entries or conversations pertaining to certain action items or events of one or more business process. The robots may also process the contributions based on the at least one business process to determine whether actions associated with the process(es) have been completed, what processes need to be completed (*e.g.*, the next process, prerequisite processes, or parallel processes), and other resulting action items. The robots can also add gadgets or widgets to the collaboration for participants to view, interact with, edit, or otherwise access to complete a process. The robots may be executed on a remote server, may be local to the entity hosting the collaboration, or may be executed in a cloud based system. Other implementations may be readily apparent.

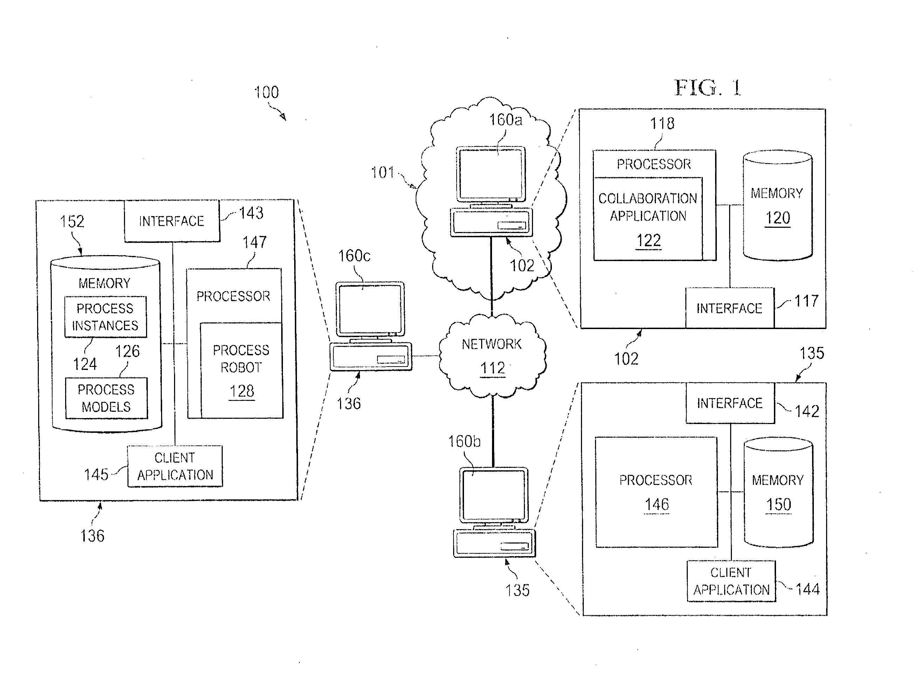

Turning to the illustrated example, FIGURE 1 illustrates an example environment 100 for monitoring entries in a collaboration and implementing one or more business process(es) of at least one business process model based on the entries. The illustrated environment 100 includes or is communicably coupled with server 102 and one or more clients 135 and 136, at least some of which communicate across network 112. In general, environment 100 depicts an example configuration of a system capable of providing access to online collaboration tools. The environment 100 also supports one or more servers operable to provide a set of services to the client 135 or server 102 in which the one or more servers can be logically grouped and accessible within a cloud computing network. For example, server 102 is a cloud-based server, persisting in cloud 101. Accordingly, the collaboration and BPM framework interface may be provided to a client 135 or server 102 as an on-demand solution through the cloud computing network or as a traditional server-client system. Further, the environment 100 also supports a BPMS system operated by one or more web application servers. Different components of the BPMS system may be used to in a collaboration based on participant entries or requests.

In general, server 102 is any server that stores one or more hosted applications, such as collaboration application 122, where at least a portion of the hosted applications are executed via requests and responses sent to users (also referred to as participants) or clients within and communicably coupled to the illustrated environment 100 of FIGURE 1. For example, server 102 may be a Java 2 Platform, Enterprise Edition (J2EE)-compliant application server that includes Java technologies such as Enterprise JavaBeans (EJB), J2EE Connector Architecture (JCA), Java Messaging Service (JMS), Java Naming and Directory Interface (JNDI), and Java Database Connectivity (JDBC). In some instances, the server 102 may store a plurality of various hosted applications, while in other instances, the server 102 may be a dedicated server meant to store and execute only a single hosted application. In FIGURE 1, the collaboration application 122 provides a collaboration interface for users to participate in collaborations. In some instances, the server 102 may comprise a web server or be communicably coupled with a web server, where the collaboration applications 122 represent one or more web-based applications accessed and executed via network 112 by the clients 135 and 136 of the system 100 to perform the programmed tasks or operations of the collaboration application 122.

At a high level, the server 102 includes an electronic computing device, such as processor 118, operable to receive, transmit, process, store, or manage data and information associated with the environment 100. The server 102 illustrated in FIGURE 1 can be responsible for receiving application requests from one or more client applications 144 or 145 or business applications associated with the clients 135 and 136 of environment 100 and responding to the received requests by processing said requests in the associated collaboration application 122, and sending the appropriate response from the collaboration application 122 back to the requesting client application 144 or 145. Alternatively, the collaboration application 122 at server 102 can be capable of processing and responding to local requests from a user accessing server 102 locally. Accordingly, in addition to requests from the external clients 135 and 136 illustrated in FIGURE 1, requests associated with the collaboration applications 122 may also be sent from internal users, external or third-party customers, other automated applications, as well as any other appropriate entities, individuals, systems, or computers. Further, the terms "client application" and "business application" may be used interchangeably as appropriate without departing from the scope of this disclosure.

As used in the present disclosure, the term "computer" is intended to encompass any suitable processing device. For example, although FIGURE 1 illustrates a single server 102, environment 100 can be implemented using two or more servers 102, as well as computers other than servers, including a server pool. Indeed, server 102 may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, illustrated server 102 may be adapted to execute any operating system, including Linux, UNIX, Windows, Mac OS, or any other suitable operating system. According to one embodiment, server 102 may also include or be communicably coupled with a mail server.

In the illustrated implementation, and as shown in FIGURE 1, the server 102 includes a processor 118, an interface 117, a memory 120, and a collaboration applications 122. The interface 117 is used by the server 102 for communicating with other systems in a client-server or other distributed environment (including within environment 100) connected to the network 112 (*e.g.*, clients 135 and 136, as well as other systems communicably coupled to the network 112). Although FIGURE 1 depicts a server-client environment, other implementations of the runtime framework for providing business processes within a collaboration are within the scope of the present disclosure. For example, the runtime framework may be provided or accessed locally at a computer. Generally, the interface 117 includes logic encoded in software and/or hardware in a suitable combination and operable to communicate with the network 112. More specifically, the interface 117 may include software supporting one or more communication protocols associated with communications such that the network 112 or interface's hardware is operable to communicate physical signals within and outside of the illustrated environment 100.

In some implementations, the server 102 may also include a user interface, such as a graphical user interface (GUI) 160a (160b for client 136 and 160c for client 136). The GUI 160a comprises a graphical user interface operable to, for example, allow the user of the server 102 to interface with at least a portion of the platform for any suitable purpose, such as creating, preparing, requesting, or analyzing data, as well as viewing and accessing source documents associated with business transactions. Generally, the GUI 160a provides the particular user with an efficient and user-friendly presentation of business data provided by or communicated within the system. The GUI 160a may comprise a plurality of customizable frames or views having interactive fields, pull-down lists, buttons, and other controls operated by the user. For example, GUI 160a may provide interactive elements that allow a user to enter or select elements of business process instances in GUI 160a. More generally, GUI 160a may also provide general interactive elements that allow a user to access and utilize various services and functions of application 122. The GUI 160a is often configurable, supports a combination of tables and graphs (bar, line, pie, status dials, etc.), and is able to build real-time portals, where tabs are delineated by key characteristics (*e.g*. site or micro-site). Therefore, the GUI 160a contemplates any suitable graphical user interface, such as a combination of a generic web browser, intelligent engine, and command line interface (CLI) that processes information in the platform and efficiently presents the results to the user visually. Similar reference numeral correspond to similar elements of FIGURE 1. For example, GUI 160b and 160c are similar to GUI 160a.

Generally, example server 102 may be communicably coupled with a network 112 that facilitates wireless or wireline communications between the components of the environment 100 (e.g., between the server 102 and client 135), as well as with any other local or remote computer, such as additional clients, servers, or other devices communicably coupled to network 112 but not illustrated in FIGURE 1. In the illustrated environment, the network 112 is depicted as a single network in FIGURE 1, but may be comprised of more than one network without departing from the scope of this disclosure, so long as at least a portion of the network 112 may facilitate communications between senders and recipients. The network 112 may be all or a portion of an enterprise or secured network, while in another instance at least a portion of the network 112 may represent a connection to the Internet. In some instances, a portion of the network 112 may be a virtual private network (VPN), such as, for example, the connection between the client 135 and the server 102. Further, all or a portion of the network 112 can comprise either a wireline or wireless link. Example wireless links may include 802.11a/b/g/n, 802.20, WiMax, and/or any other appropriate wireless link. In other words, the network 112 encompasses any internal or external network, networks, sub-network, or combination thereof operable to facilitate communications between various computing components inside and outside the illustrated environment 100. The network 112 may communicate, for example, Internet Protocol (IP) packets, Frame Relay frames, Asynchronous Transfer Mode (ATM) cells, voice, video, data, and other suitable information between network addresses. The network 112 may also include one or more local area networks (LANs), radio access networks (RANs), metropolitan area networks (MANs), wide area networks (WANs), all or a portion of the Internet, and/or any other communication system or systems at one or more locations. The network 112, however, is not a required component of the present disclosure.

As illustrated in FIGURE 1, server 102 includes a processor 118. Although illustrated as a single processor 118 in FIGURE 1, two or more processors may be used according to particular needs, desires, or particular embodiments of environment 100. Each processor 118 may be a central processing unit (CPU), a blade, an application specific integrated circuit (ASIC), a field-programmable gate array (FPGA), or another suitable component. Generally, the processor 118 executes instructions and manipulates data to perform the operations of server 102 and, specifically, the one or more plurality of collaboration applications 122. Specifically, the server's processor 118 executes the functionality required to receive and respond to requests from the clients 135 and their respective client applications 144, as well as the functionality required to perform the other operations of the collaboration application 122.

Regardless of the particular implementation, "software" may include computer-readable instructions, firmware, wired or programmed hardware, or any combination thereof on a tangible medium operable when executed to perform at least the processes and operations described herein. Indeed, each software component may be fully or partially written or described in any appropriate computer language including C, C++, Java, Visual Basic, assembler, Perl, any suitable version of 4GL, as well as others. It will be understood that while portions of the software illustrated in FIGURE 1 are shown as individual modules that implement the various features and functionality through various objects, methods, or other processes, the software may instead include a number of sub-modules, third party services, components, libraries, and such, as appropriate. Conversely, the features and functionality of various components can be combined into single components as appropriate. In the illustrated environment 100, processor 118 executes one or more collaboration applications 122 on the server 102.

At a high level, each of the one or more collaboration applications 122 is any application, program, module, process, or other software that may execute, change, delete, generate, or otherwise manage information according to the present disclosure, particularly in response to and in connection with one or more requests received from the illustrated clients 135 and their associated client applications 144. In certain cases, only one collaboration application 122 may be located at a particular server 102. In others, a plurality of related and/or unrelated collaboration applications 122 may be stored at a single server 102, or located across a plurality of other servers 102, as well. In certain cases, environment 100 may implement a composite collaboration application 122. For example, portions of the composite application may be implemented as Enterprise Java Beans (EJBs) or design-time components may have the ability to generate run-time implementations into different platforms, such as J2EE (Java 2 Platform, Enterprise Edition), ABAP (Advanced Business Application Programming) objects, or Microsoft's .NET, among others. Additionally, the collaboration applications 122 may represent web-based applications accessed and executed by remote clients 135 or client applications 144 via the network 112 (e.g., through the Internet). Further, while illustrated as internal to server 102, one or more processes associated with a particular collaboration application 122 may be stored, referenced, or executed remotely. For example, a portion of a particular collaboration application 122 may be a web service associated with the application that is remotely called, while another portion of the collaboration application 122 may be an interface object or agent bundled for processing at a remote client 135 or 136. Moreover, any or all of the collaboration applications 122 may be a child or sub-module of another software module or enterprise application (not illustrated) without departing from the scope of this disclosure. Still further, portions of the collaboration application 122 may be executed by a user working directly at server 102, as well as remotely at client 135 or 136. As mentioned previously, server 102 may host collaboration applications 122 in a cloud based environment.

As illustrated, processor 118 can also execute a collaboration (via the collaboration application 122) that provides an environment and user interface for engaging in online collaborations involving at least one participant. The collaboration may also include other participants and collaboration robots. In some implementations, the collaboration can be executed by a different processor or server external to server 102, such as by a server communicably coupled to server 102 through network 112. For example, the collaboration may be provided as an on-demand service through a cloud computing network, as a web service accessible via network 112, or as a service provided on a dedicated server. The collaboration can provide interfaces, modules, services, or metadata definitions that enable client applications 144 or 145 to provide support for implementing a business process executed at server 102 or at a different server or workstation. In the present disclosure, a business process may be any collection of related activities, tasks, or sequential steps performed in association with a particular business context, business partner, or customer. Business processes may be performed in software as a computer program and/or in connection with a computer microprocessor, server, workstation, instance of a computer program, thread of execution within a computer program, or other data processing element. Each business process may be associated with a workflow, and each distinct case or occurrence of the workflow or a portion of the workflow may be a separate process instance of a particular business process. Business processes are described in more detail below.

In the illustrated example, the server 102 may provide a collaboration application 122 for presenting graphical tools to clients for participating in collaborations and for interacting with gadgets or widgets associated with a business process. In general, the server 102 also includes memory 120 for storing data and program instructions. Memory 120 may include any memory or database module and may take the form of volatile or non-volatile memory including, without limitation, magnetic media, optical media, random access memory (RAM), read-only memory (ROM), removable media, or any other suitable local or remote memory component. Memory 120 may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the server 102 and its one or more collaboration applications 122. In some implementations, collaboration application 122 is available to a client, such as client 135, through a web browser-based application at client 135. In some instances, collaboration application 122 persists in a cloud based network. Example collaboration applications include Google Wave, TextFlow (TM), Google Groups, MindMeister, and Zoho (TM). The collaboration may be a synchronous collaboration, such as collaborations undertaken using a chat program or other synchronous collaboration tools. The collaboration may be asynchronous, and the participants may use e-mail programs to conduct the collaboration.

The illustrated environment of FIGURE 1 also includes one or more clients 135. Each client 135 may be any computing device operable to connect to or communicate with at least the server 102 and/or via the network 112 using a wireline or wireless connection. In addition, client 135 may persist in a cloud based network. Further, as illustrated in FIGURE 1, client 135 includes a processor 146, an interface 142, a graphical user interface (GUI) 160b, a client application 144, and a memory 150. In general, client 135 comprises an electronic computer device operable to receive, transmit, process, and store any appropriate data associated with the environment 100 of FIGURE 1. It will be understood that there may be any number of clients 135 associated with, or external to, environment 100. For example, while illustrated environment 100 includes one client 135, alternative implementations of environment 100 may include multiple clients communicably coupled to the server 102, or any other number of clients suitable to the purposes of the environment 100. Additionally, there may also be one or more additional clients 135 external to the illustrated portion of environment 100 that are capable of interacting with the environment 100 via the network 112. Further, the terms "client," "user," and "participant" may be used interchangeably as appropriate without departing from the scope of this disclosure. Moreover, while each client 135 is described in terms of being used by a single user, this disclosure contemplates that many users may use one computer, or that one user may use multiple computers. Client application 144 may be a web browser or other application used to access, join, and/or participate in a collaboration on collaboration application 122 hosted on server 102.

The GUI 160b associated with client 135 comprises a graphical user interface operable to, for example, allow the user of client 135 to interface with at least a portion of the platform for any suitable purpose, such as creating, preparing, requesting, or analyzing data, as well as viewing and accessing source documents associated with business transactions. Generally, the GUI 160b provides the particular user with an efficient and user-friendly presentation of business data provided by or communicated within the system. The GUI 160b may comprise a plurality of customizable frames or views having interactive fields, pull-down lists, and buttons operated by the user. For example, GUI 160a may provide interactive elements that allow a user to enter or select elements of business process instances in GUI 160b. The business process steps and interdependencies may be graphically rendered by the collaboration module 104 and presented in GUI 160b. Further, the user may request a business process, select from a number of business processes (or process steps) available, and enter information to satisfy a business process step (or steps) through GUI 160b. More generally, GUI 160b may also provide general interactive elements that allow a user to access and utilize various services and functions of application 144. The GUI 160b is often configurable, supports a combination of tables and graphs (bar, line, pie, status dials, etc.), and is able to build real-time portals, where tabs are delineated by key characteristics (*e.g*. site or micro-site). Therefore, the GUI 160b contemplates any suitable graphical user interface, such as a combination of a generic web browser, intelligent engine, and command line interface (CLI) that processes information in the platform and efficiently presents the results to the user visually.

As used in this disclosure, client 135 is intended to encompass a personal computer, touch screen terminal, workstation, network computer, kiosk, wireless data port, smart phone, personal data assistant (PDA), one or more processors within these or other devices, or any other suitable processing device. For example, each client 135 may comprise a computer that includes an input device, such as a keypad, touch screen, mouse, or other device that can accept user information, and an output device that conveys information associated with the operation of the server 102 (and collaboration application 122) or the client 135 itself, including digital data, visual information, the client application 144, or the GUI 160b. Both the input and output device may include fixed or removable storage media such as a magnetic storage media, CD-ROM, or other suitable media to both receive input from and provide output to users of client 135 through the display, namely, the GUI 160b.

The illustrated environment of FIGURE 1 also includes one or more clients 136. Client 136 represents a client that may participate in a collaboration with 135 and provide business process functionality to the collaboration for the benefit of client 135. Each client 136 may be any computing device operable to connect to or communicate with at least the server 102 and/or via the network 112 using a wireline or wireless connection. Further, as illustrated in FIGURE 1, client 136 includes a processor 147, an interface 143, a graphical user interface (GUI) 160c, a client application 145, and a memory 152. In general, client 136 comprises an electronic computer device, such as processor 147, operable to receive, transmit, process, and store any appropriate data associated with the environment 100 of FIGURE 1. It will be understood that there may be any number of clients 136 associated with, or external to, environment 100. For example, while illustrated environment 100 includes one client 136, alternative implementations of environment 100 may include multiple clients communicably coupled to the server 102, or any other number of clients suitable to the purposes of the environment 100. Additionally, there may also be one or more additional clients 136 external to the illustrated portion of environment 100 that are capable of interacting with the environment 100 via the network 112. Moreover, while each client 136 is described in terms of being used by a single user, this disclosure contemplates that many users may use one computer, or that one user may use multiple computers. Client 136 may persist in a cloud based network.

Processor 147 may run process robot 128 during a collaboration with client 135 in collaboration application 122 to monitor entries made by the participants to identify business processes germane to the collaboration. The process robot 128 can provide a user interface for performing the process driven collaborations that utilize participant entries and other data to determine process step completion and inject new process steps into the collaboration. For example, the process robot 128 may specifically inject a process step widget based on participant entered information either as textual information, graphical information, or through prior widgets, gadgets, etc. Process robot 128 is a program that monitors the collaboration to manage the implementation of business processes into the collaboration. The robot 128 may monitor entries made by participants 135 and 136 of a collaboration to identify one or more business processes to implement or to determine a particular process step to inject (e.g., as a widget) into the collaboration. Further, the robot 128 may also determine the runtime sequence of process steps to implement based on participant entries into the collaboration. For example, the robot 128 determines the process to instantiate, and also determines which process step of the instantiated process to implement given the available data. In some instances, the robot 128 may act as a participant, soliciting information, responding to questions, and providing widgets for participant data entry for the appropriate process step or steps. In a collaboration, multiple process steps may be executed simultaneously by one or more participants. The robot 128 may monitor the collaboration to determine when a particular process step is completed and when to execute the subsequent step(s). In embodiments, the participants 135 or 136 may choose the way the robot 128 behaves. For example, the participant 135 or 136 may want to address a single process step at a time. In that case, the robot would understand to identify a runtime sequence definition that provides subsequent process steps upon completion of the prior step or upon request from the participant 135 or 136.

The GUI 160c associated with client 136 comprises a graphical user interface operable to, for example, allow the user of client 136 to interface with at least a portion of the platform for any suitable purpose, such as creating, preparing, requesting, or analyzing data, as well as viewing and accessing source documents associated with business transactions. Generally, the GUI 160c provides the particular user with an efficient and user-friendly presentation of business data provided by or communicated within the system. The GUI 160c may comprise a plurality of customizable frames or views having interactive fields, pull-down lists, and buttons operated by the user. For example, GUI 160a may provide interactive elements that allow a user to enter or select elements of business process instances in GUI 160c. The business process steps and interdependencies may be graphically rendered by the collaboration application 122 and presented in GUI 160c. Further, the user may request a business process, select from a number of business processes (or process steps) available, and enter information to satisfy a business process step (or steps) through GUI 160c. More generally, GUI 160c may also provide general interactive elements that allow a user to access and utilize various services and functions of application 145. The GUI 160c is often configurable, supports a combination of tables and graphs (bar, line, pie, status dials, etc.), and is able to build real-time portals, where tabs are delineated by key characteristics (*e.g*. site or micro-site). Therefore, the GUI 160b contemplates any suitable graphical user interface, such as a combination of a generic web browser, intelligent engine, and command line interface (CLI) that processes information in the platform and efficiently presents the results to the user visually.

As used in this disclosure, client 136 is intended to encompass a personal computer, touch screen terminal, workstation, network computer, kiosk, wireless data port, smart phone, personal data assistant (PDA), one or more processors within these or other devices, or any other suitable processing device. For example, each client 136 may comprise a computer that includes an input device, such as a keypad, touch screen, mouse, or other device that can accept user information, and an output device that conveys information associated with the operation of the server 102 (and collaboration application 122) or the client 136 itself, including digital data, visual information, the client application 145, or the GUI 160c. Both the input and output device may include fixed or removable storage media such as a magnetic storage media, CD-ROM, or other suitable media to both receive input from and provide output to users of client 135 through the display, namely, the GUI 160c.

Memory 152 may store data objects such as process models 126 used in the collaboration application 122. For example, a particular process model 126 may include process model definitions and parameters associated with a particular business process. The process models 126 may be retrieved from memory 152 when the process robot 128 is applying a business process or determining the runtime process flow for an identified business process. During a process instance migration, the original process model may be retrieved from the store of process models 126 in memory 152 and used as a basis for defining parameters in the new process model along with the additional changes requested by the user. Memory 152 may also store information associated with process instances 124. The process instances 124 may be instantiated at runtime during a collaboration. A process instance 124 can consist of variables that hold the status of a particular process. The variables capture the progress of control and data flows using elements such as instruction pointers and variables holding instances of business documents that were manipulated during execution of the process.

While FIGURE 1 is described as containing or being associated with a plurality of elements, not all elements illustrated within environment 100 of FIGURE 1 may be utilized in each alternative implementation of the present disclosure. For example, although FIGURE 1 depicts a server-client environment implementing a collaboration application 122 at server 102 that can be accessed by client computer 135 or 136, in some implementations, server 102 executes a local application that features an application UI accessible to a user directly utilizing GUI 160a. Further, although FIGURE 1 depicts a server 102 external to network 112, servers may be included within the network 112 as part of a cloud network solution, for example. Additionally, one or more of the elements described herein may be located external to environment 100, while in other instances, certain elements may be included within or as a portion of one or more of the other described elements, as well as other elements not described in the illustrated implementation. Further, certain elements illustrated in FIGURE 1 may be combined with other components, as well as used for alternative or additional purposes in addition to those purposes described herein.

Companies employ business process management suites (BPMS) to model, document, automate, govern and monitor complex repetitive processes. A process' surrounding conditions and contextual constraints tend to change frequently and rapidly. The changes may include all sorts of suddenly occurring exceptional situations such as short-term changes in legislative regulations and administrative guidelines that are to be obeyed, unexpected resource unavailability which must be compensated for, additional customer requests that should be addressed, suddenly occurring workload peaks that require simplifying processes to successfully handle the workload, and the like. Business process end users face the need to flexibly read on the exceptional situations at low costs while still adhering to the "business goals," such as deliverables or interfaces, of the end-to-end processes they participate in. Companies set themselves apart from their competitive environment by both being able to dynamically adapt to exceptional situations while still taking advantage of the inherent benefits of a BPMS infrastructure (such as monitoring process measures and tracking progress, enforcing mandatory process steps and constraining resource consumption, etc.). Accordingly, process flexibility helps companies broaden the spectrum of BPMS use-cases and, thus, to dramatically improve their "return of investment" on BPMS acquisitions.

A BPMS may include at least one business process. A business process may include a collection of related, structured activities or tasks that produce a specific service or product (serve a particular goal) for a particular customer or customers. Business processes may include management processes, which govern the operation of a system. Management processes may include corporate governance and strategic management. Business processes may also include operational processes, which may constitute the core business and create the primary value stream. Operational processes include purchasing, manufacturing, marketing, and sales. Supporting processes, which support the core processes, include accounting, recruitment, and technical support.

A business process can be decomposed into several sub-processes, which have their own attributes, but also contribute to achieving the goal of the overall process. The analysis of business processes typically includes the mapping of processes and sub-processes down to activity level. A business process model is a model of one or more business processes, and defines the ways in which operations are carried out to accomplish the intended objectives of an organization. Such a model remains an abstraction and depends on the intended use of the model. It can describe the workflow or the integration between business processes. It can be constructed in multiple levels. A workflow is a depiction of a sequence of operations, declared as work of a person, work of a simple or complex mechanism, work of a group of persons, work of an organization of staff, or machines. Workflow may be seen as any abstraction of real work, segregated in workshare, work split or whatever types of ordering. For control purposes, workflow may be a view on real work under a chosen aspect.

BPM suite software provides programming interfaces (web services, application program interfaces (APIs)) which allow enterprise applications to be built to leverage the BPM engine. Programming languages that are being introduced for BPM include: Architecture of Integrated Information Systems (ARIS) supports EPC; Business Process Execution Language (BPEL); Web Services Choreography Description Language (WS-CDL); XML Process Definition Language (XPDL); Java Process Definition Language (JBPM); and others. Other technologies related to business process modeling include model-driven architecture and service-oriented architecture. Business process modeling tools provide business users with the ability to model their business processes, implement and execute those models, and refine the models based on as-executed data. As a result, business process modeling tools can provide transparency into business processes, as well as the centralization of corporate business process models and execution metrics.

Modeling and simulation functionality allows for pre-execution "what-if" modeling and simulation. Post-execution optimization is available based on the analysis of actual as-performed metrics. Business process modeling diagrams include use-case diagrams currently integrated in UML; activity diagrams, also currently adopted by UML. Business process modeling techniques include Business Process Modeling Notation ("BPMN"), Cognition enhanced Natural language Information Analysis Method (CogNIAM); Extended Business Modeling Language (xBML); Event-driven process chain (EPC); ICAM DEFinition (IDEF0); Unified Modeling Language (UML); and extensions for business process.

The collaboration process using BPMN and its associated semantics may result in a collaboration instance at runtime or may be executed upon selection by a participant of a particular business process. The actual collaboration may then driven by one or more robots, which become a collaboration participant and drive the collaboration according to a predefined collaboration structure. The robot(s) then can include new process steps into the collaboration process (e.g., using open APIs). In an example implementation, a participant may begin or join a collaboration. During the collaboration, the participant provides entries that are monitored by a robot. The robot identifies, based on an event or entry or rule, a particular business process germane to the collaboration. The robot may also identify a particular process step of the business process (or associated interaction) that should be injected into the collaboration. In some instances, the robot may also identify, create, or request a widget associated with that BPMN process step, which it injects into the collaboration. The participant interacts with the widget, providing input to complete the process step. In some instances, the robot may have monitored the collaboration and compiled a library of data associated with the participant's entries, which the robot can use to advance the process step towards completion. This monitoring step can be performed prior to creation of the widget in order to streamline the process for the participant by, for example, soliciting information from the participant that the system does not already have. In other instances, the robot may derive information from the participant's entries. For example, the widget may ask for a zip code for the participant's residence. The robot can derive a city and state from the zip code. Other example implementations are readily apparent. In certain instances, widgets are not used. Entries may be processed, and the robot may inject or insert questions, statements, or other interactions associated with a process or process step into the collaboration. Based on those interactions (*i.e*., responses thereto), the robot can also derive additional information related to the process or process step.

The information received may be processed according to the definitions or rules set by the BPM. The robot may determine when the process step is complete. If the process step is not complete or there is missing information, the robot may solicit that information from the participant(s). When the process step is completed, the robot determines whether the next process step should be implemented. As described above, in certain instances, the process steps sequence can be determined at runtime. In other instances, however, the robot may determine the subsequent process step based on information received from the collaboration participants. For the subsequent process step, the robot implements a widget associated therewith to receive information from the participant(s) to advance completion of this new process step. Data is stored throughout the process in a memory.

The robots can also assign particular participants to these process steps to control the privacy of certain steps. A robot is an automated participant on a collaboration. A robot can read the contents of a collaboration in which it participates, modify the collaboration's contents, add or remove participants, create new blips and new collaborations, and insert content into collaborations. In short, a robot can perform many of the actions that any other participant can perform. Robots are created and manipulated using a robots API. A robots API may be used to perform actions such as modifying information in a collaboration; inserting elements such as gadgets and images in a collaboration; interacting with participants on a collaboration; communicating and synchronize information in a collaboration to the outside world or to other collaborations; accessing or modify state in a third-party system (such as a database).

Robots may interact with users or participants of a collaboration by monitoring collaboration entries, and processing those entries to determine whether a business process cycle has been completed. The robot may add widgets or gadgets or other modular tools to the collaboration to permit participants to enter, visualize, or otherwise manipulate or sense data as part of a business process. A widget is a small, portable application or piece of dynamic content that can easily be placed into a web page or an embedded browser within a rich client. A defining characteristic of a widget is to provide an interaction point for the manipulation of a given kind of data. In other words, widgets are basic visual building blocks that, combined in an application, hold data processed by the application and the available interactions on these data. Widgets can be written in any language (Java, .NET, PHP, and more) or can be a simple HTML fragment. Widgets that pass events can be wired together to create mashups. Widgets are called different names by different entities, such as gadgets, blocks, and flakes. Widgets may be created with a variety of tools, including Eclipse, IBM WebSphere smash, or even Notepad. Programs with widget creation environments such as Lotus Mashups, for example, are available for creating and deploying widgets.

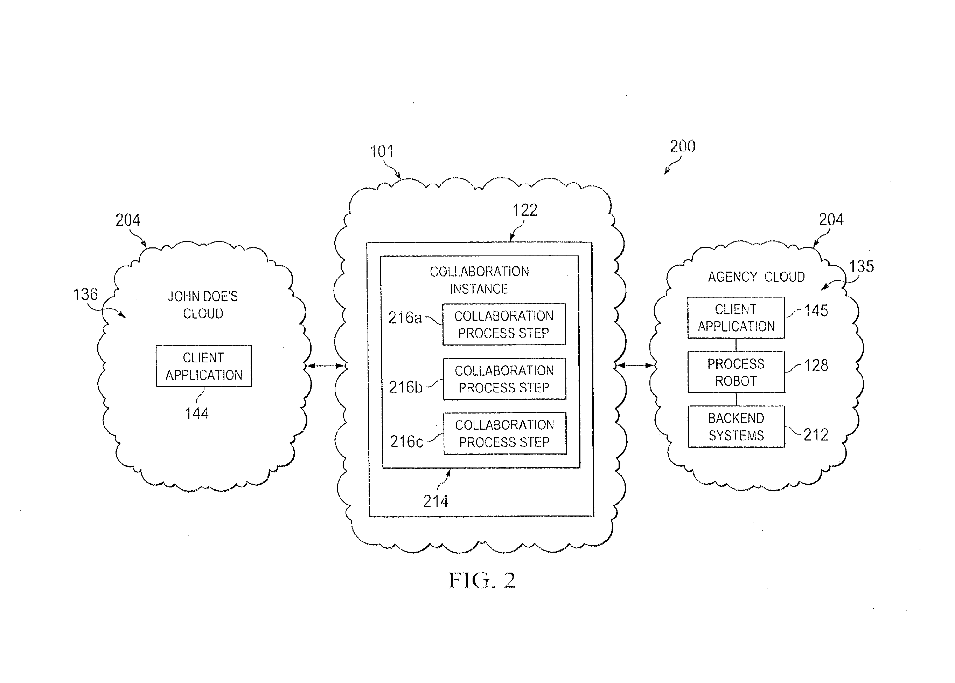

FIGURE 2 illustrates an example collaboration 200. Client 135 (here, by example, named John Doe) may visit the web site of his tax preparation service company to start a "tax preparation" process. The process is described by a BPMN process, using process orchestration programs and ad-hoc semantics. John starts a collaboration instance 214, which may persist in the cloud 101 based network or may be hosted by the tax company's website, using client application 144. John invites Rob to join the collaboration. Client 136 (here, by example, named Rob) sees in his collaboration inbox the new collaboration 214 over client application 145. John and Rob can now collaborate on, for example, collaboration process steps 216a-c and execute each of the tax preparation steps identified in the BPM. Each process step may be displayed on the collaboration process step 216a-c as a widget interface, and either John or Rob can contribute information to the collaboration directly or by widget interface. John may provide Rob with information in response to questions. Agency cloud 204 includes client 136 running client application 145 and process robot 128. Robot 128 monitors the collaboration 214, and accesses the backend system 212 that stores the BPM process modules to instantiate process widgets into the collaboration based on John's entries. The widgets are injected into collaboration process steps 216a-c in an order determined at runtime or as requested by John, etc.

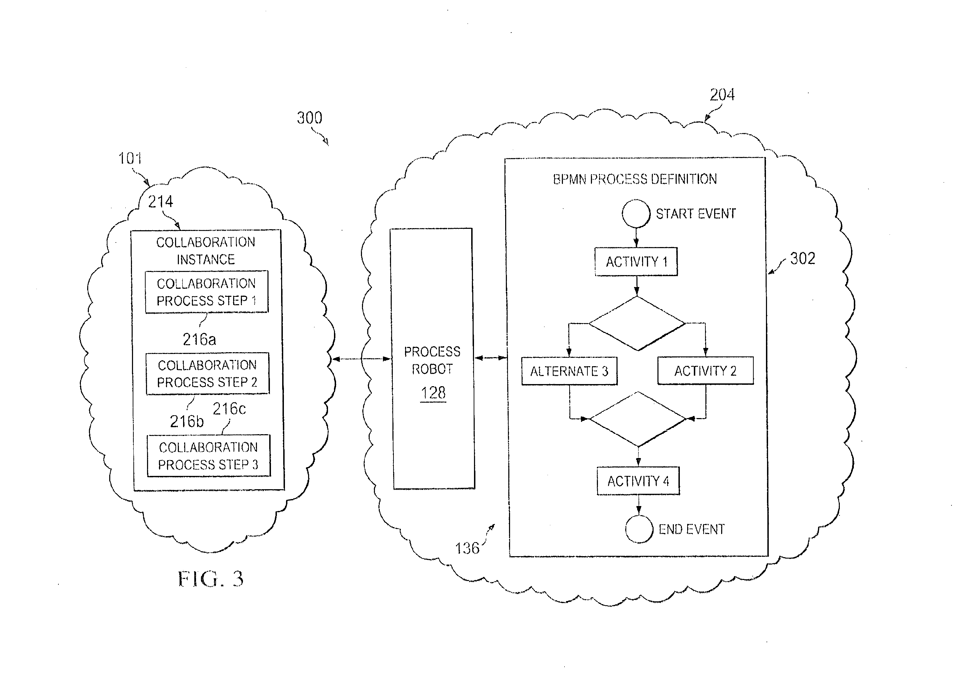

Figure 3 illustrates an example environment 300. A collaboration instance 214 may persist in cloud 101. Client 136, persisting in cloud 204 in communication with the server hosting collaboration instance 214 over a cloud-based network, may include robot 128 able to access process definitions 302. The robot 128 may monitor the widget entries or the conversion entries to determine whether the particular process is being executed. Robot 128 may be a participant in the collaboration between John and his tax consultant. Further, the robot 128 can store the data and assign metadata associated therewith for future use in the backend (*e.g*., backend 212 of Fig. 2). For example, John's salary may be used to compute his taxes for the current fiscal year, but may also be saved for use in the following year's tax calculations. The robot interprets the BPMN process definition 302 to determine the next step in the process to be injected into the collaboration. The robot may also participate in the collaboration and inject widgets associated with process steps into the collaboration. When the robot determines that a process has been completed, the robot can begin another process step, and continue monitoring the collaboration. When the robot 128 determines that each of the business process cycles (on collaboration process steps 216a-c) is complete, the robot 128 may provide a message indicating such. Likewise, if there is still missing data for a process, the robot 128 may request the John for that data (either by providing the necessary widgets or by providing a query string to the collaborators).

The definition of these predefined collaboration steps are done using BPM notation ("BPMN") and semantics. The BPMN based collaboration therefore can include human activities, which would be exposed as collaboration process steps in a collaboration, automated activities that would access, for example, backend data and gateways to fork or merge a collaboration path. In some cases, the BPMN ad-hoc activities describe the steps, but not necessarily the order in which they are executed. In these cases, a constraint-based or rule-based execution of these steps may be beneficial, since the actual collaboration interface on which the collaboration participants have to collaborate on are determined at runtime based on, e.g., the output of one of the previous process steps.

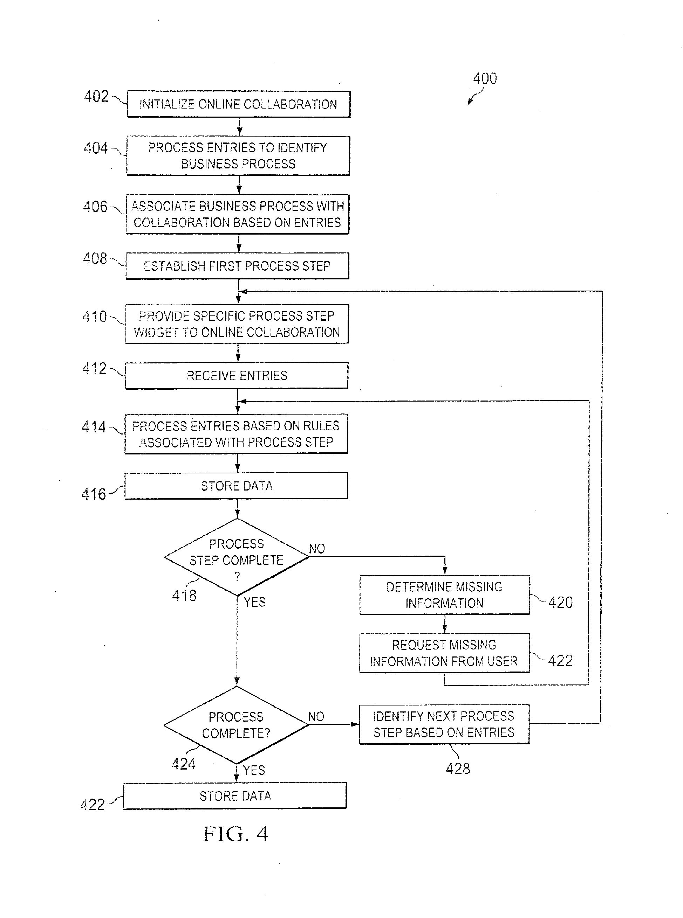

Figure 4 is a process flow diagram 400 illustrating a method for providing a business process in an online collaboration. A participant may access a host server to initialize a collaboration (402). In certain instances, the participant may be joining a collaboration that has already been initialized by other participants, by the host server, or by a robot. The participant may log into the host server using a user name and password or other secure and/or unique identifier. The host server may associate certain information with the participant that it may use throughout the collaboration. Such information may be, but is not limited to, personal, demographic, or financial information or other information that the host server may access and use for the purposes of the collaboration and/or the business process(es). The participant may enter information into the collaboration that the host server can process (404). The information may include search queries, questions, specific requests, chat dialogues, or other information. Similarly, the host server or collaboration host, upon detecting a new participant, may prompt the participant for information by asking the participant a question (*e.g*., through a GUI) or by providing the participant a widget to interact with.

A business process model may be associated with the collaboration (406). This association may be based on or may be in response to entries received from the participant(s), and may occur at any suitable point during execution of the collaboration. Further, the association may be event driven, and widgets may be injected into the collaboration in response to events identified in the collaboration from participants. The business process model may include one or more business process steps. The order of the business process steps may be determined at runtime based on the context of the collaboration and the available data. For example, the first step may be determined (408). An interface module representing a first business process step may be provided to the participants of the collaboration (410). The interface module may be a widget that permits the participants to enter information with the intention of advancing the process step to completion. The widget, however, does not necessarily require participant input. For example, the widget may provide output to the robot based on a triggering event. The widgets may be created, organized, and instantiated based on definitions associated with the business process or process step. In some instances, a widget is not used, and the participants may enter data into the collaboration interface, sometimes in response to a question or other interaction injected or entered into the collaboration by the robot. The robot may monitor the entries from the collaboration, parse the entries, and determine how to proceed. If a widget is used, the information is received in the widget (412). Entries are processed in order to advance process steps towards completion (414). In certain embodiments, the entries are processed based on rules associated with the process step. As mentioned above, in certain steps, the widget is not used. Instead, the system (or the robot) may interpret entries made by participants in the collaboration in order to process data in accordance with the business process rules. Process step definitions may prompt the participants for more information depending on whether the entries satisfy the requirements of the process step. Data is stored throughout the cycle for further use (416).

The system determines whether the process step is complete based on the received data (418). If the process step is not complete, the missing information or action items may be determined (420), and that information is requested from the participants (422). The system again process the entries and restarts that loop (412-418). If the process step is complete, the system determines whether the entire business process is complete (424). If so, the system alerts the participants and stores the data (426). If not, then the system determines the next process step based on the available data (428). The entire process step cycle may be determined at run time, and the system may need to advance to a subsequent step following the present step. In certain instances, however, processes may be executed in parallel (*e.g.*, when the user provides sufficient information to execute multiple steps simultaneously or when multiple participants may execute different process steps individually). The widget or widgets associated with the next process step(s) is provided to the participants (410) in situations where that is appropriate.

The preceding figures and accompanying description illustrate example processes and computer implementable techniques. But environment 100 (or its software or other components) contemplates using, implementing, or executing any suitable technique for performing these and other tasks. It will be understood that these processes are for illustration purposes only and that the described or similar techniques may be performed at any appropriate time, including concurrently, individually, or in combination. In addition, many of the steps in these processes may take place simultaneously and/or in different orders than as shown. Moreover, environment 100 may use processes with additional steps, fewer steps, and/or different steps, so long as the methods remain appropriate.

In other words, although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A computer implemented method for providing a business process in an online collaboration comprising:
associating a business process model with the online collaboration, the business process model including at least one business process;
processing data received from a participant in accordance with a process step associated with the business process; and
storing the data in a memory.

2. The method of claim 1, further comprising
identifying a first business process defined by the business process model based on data received from the participant; and/or
monitoring participant entries in the online collaboration;
identifying a business process model based on the participant entries; and
implementing one or more business processes of the business process model.

3. The method of claim 2, wherein the data received from the participant
comprises information received from the participant during the online collaboration;
and/or
is received from metadata associated with the participant.

4. The method of any one of the preceding claims, wherein processing the data received from the participant further comprises processing the data based on rules associated with the business process.

5. The method of any one of the preceding claims further comprising providing an interface module to the online collaboration, the interface module associated with the at least one business process and configured to receive data from a participant of the online collaboration, preferably wherein the interface module is a widget configured to receive data associated with the process step of the business process.

6. The method of claim 5, wherein the business process is a first business process and the interface module is a first interface module, the method further comprising:
identifying a second business process based on the data received from the participant; and
providing a second interface module to the online collaboration, the second interface associated with the second business process.

7. The method of claim 6, wherein the second interface module is provided to the participant upon a determination that the first business process is completed.

8. A computer program product for providing a business process in a collaboration, the computer program product comprising computer readable instructions embodied on tangible, non-transient media and operable when executed to:
associate a business process instance with the collaboration, the business process instance based on a business process model, the business process model defining one or more business process steps;
provide an interface module to the collaboration, the interface module associated with the business process and configured to receive data from a participant of the collaboration;
process data received from the participant interacting with the interface module in accordance with a process step associated with the business process; and
store the data in a memory.

9. The computer program product of claim 8, further operable to
identify a first business process of the business process model based on participant information; and/or
monitor participant entries in the collaboration;
identify a business process model based on the participant entries; and
implement one or more business processes of the business process model.

10. The computer program product of claim 9, wherein the participant information is received from
the participant during the collaboration; and/or
metadata associated with the participant.

11. The computer program product of any one of claims 8 to 10, wherein processing the data received from the participant further comprises processing the data based on rules associated with the business process model.

12. The computer program product of any one of claims 8 to 10, wherein the business process is a first business process and the interface is a first interface, the computer program product further operable to:
interpret the data received from the participant of the collaboration;
identify a second business process based on the data received from the participant; and
provide a second interface to the collaboration, the second interface associated with the second business process.

13. The computer program product of any one of claims 8 to 10, wherein the interface module is a widget configured to receive data associated with the process step of the business process.

14. A system for implementing a business process into an online collaboration, the system comprising:
memory operable to store information associated with process steps of a plurality of business processes; and
one or more processors operable to instantiate a robot program as part of the online collaboration, the robot program operable to:
monitor entries made by one or more participants in the online collaboration;
associate a particular business process from the plurality of business processes with the online collaboration based on the entries;
provide a widget to the one or more participants of the online collaboration, the widget associated with a first business process step of the business process and configured to receive information from one or more participants of the online collaboration,
process the information received from the one or more participants interacting with the widget in accordance with a process step associated with the business process, and
store the information in the memory.

15. The system of claim 14, wherein the robot program is a participant in the online collaboration; and/or wherein the robot program is further operable to:
interpret business process management notation process definitions to determine an order of process steps to be executed in the online collaboration; and
inject widgets into the online collaboration based on the business process management notation definitions and information received from the one or more participants.
